Europäisches Patentamt

European Patent Office

Office européen des brevets

(19)

(11) Veröffentlichungsnummer: **0 004 056**
**B1**

# (12) EUROPÄISCHE PATENTSCHRIFT

(45) Veröffentlichungstag der Patentschrift:
**20.05.81**

(21) Anmeldenummer: **79100655.4**

(22) Anmeldetag: **05.03.79**

(51) Int. Cl.³: **E 03 B 11/16,** E 03 B 5/00,
G 05 D 16/06

(54) **Druckgeregelte Wasserversorgungsanlage.**

(30) Priorität: **13.03.78 DE 2810738**

(43) Veröffentlichungstag der Anmeldung:
**19.09.79 Patentblatt 79/19**

(45) Bekanntmachung des Hinweises auf die Patenterteilung:
**20.05.81 Patentblatt 81/20**

(84) Benannte Vertragsstaaten:
**BE CH FR GB IT NL SE**

(56) Entgegenhaltungen:
**DE-A-2 424 056**
**DE-B-1 248 574**
**DE-B-1 459 543**
**US-A-2 779 352**

(73) Patentinhaber: **SIEMENS AKTIENGESELLSCHAFT Berlin
und München, Postfach 22 02 61, D-8000 München 22 (DE)**

(72) Erfinder: **Schönwald, Siegfried, Burgstrasse 18,
D-8740 Bad Neustadt (DE)**
Erfinder: **Breyer, Eberhard, St.-Bruno-Strasse 9,
D-8740 Bad Neustadt (DE)**

## Druckgeregelte Wasserversorgungsanlage

Die Erfindung bezieht sich auf eine druckgeregelte Wasserversorgungsanlage mit einem zwischen einer Zuleitung und einer zu einer Verbraucheranlage führenden Entnahmeleitung angeordnetem Druckspeicher, wobei zwischen der Mündung der Zuleitung und dem Druckspeicher eine durch Druckdifferenz betätigbare Membran vorgesehen und durch diese ein eine mit der Zuleitung verbundene Förderpumpe ein- und ausschaltender Druckschalter gesteuert ist.

Eine solche Wasserversorgungsanlage ist durch die DE-B-1 459 543 bekannt. Dort ist in einem gesonderten Gehäuse eine Membran angeordnet, welche das Gehäuse in zwei Räume unterteilt. Die beiden Räume sind über Verbindungsleitungen mit einer zum Druckspeicher und der Verbraucheranlage führenden Versorgungsleitung verbunden. Durch eine Verengung in der Versorgungsleitung wird eine Druckdifferenz erzeugt, welche über die beiden Verbindungsleitungen auf die Membran einwirkt und diese betätigt. Mit der Membran ist ein Ventilkegel verbunden, der mit einem an der zum Druckschalter führenden Leitung ausgebildeten Ventilsitz zusammenwirkt. Für die Funktionsfähigkeit der bekannten Wasserversorgungsanlage ist ferner ein Rückschlagventil erforderlich, welches nach dem Abschalten der Förderpumpe einen Rückfluß des Wassers infolge des durch den Druckspeicher erzeugten Druckes verhindert.

Der Erfindung liegt die Aufgabe zugrunde, bei einer Wasserversorgungsanlage der eingangs beschriebenen Art mehrere Funktionen an einer Stelle zusammenzufassen und dadurch den konstruktiven Aufbau zu vereinfachen.

Die Lösung der gestellten Aufgabe gelingt nach der Erfindung dadurch, daß die Membran direkt im Förderstrom des Wassers angeordnet und mit einer Durchlaßöffnung versehen ist, deren Größe in bezug auf die Förderleistung der Pumpe so bemessen ist, daß an der Durchlaßöffnung ein eine Druckdifferenz hervorrufender Druckabfall entsteht, und daß ferner auf der dem Druckspeicher zugekehrten Seite der Membran über der Durchlaßöffnung ein unter der Einwirkung einer auf die Membran gerichteten Kraft stehendes Rückschlagventil und die Mündung einer zum Druckschalter führenden Leitung angeordnet sind, wobei der Abstand der Mündung zur Membranoberfläche so bemessen ist, daß die Membran beim Auslenken infolge einer Druckdifferenz an der Mündung anliegt und diese verschließt. Bei dieser konstruktiven Ausbildung der Anlage bildet die Membran den Ventilsitz für das Rückschlagventil und verschließt die zum Druckschalter führende Leitung direkt ohne Zwischenschaltung eines gesonderten Ventilkörpers. Darüber hinaus ergibt sich eine wesentliche Platzersparnis. Dadurch, daß auf der dem Druckspeicher abgekehrten Seite der Membran ein Abstützring konzentrisch zur Durchlaßöffnung angeordnet ist, wird eine einwandfreie Abdichtung zwischen dem Druckspeicher und der Zuleitung erzielt.

Um ein sicheres Abschalten der Förderpumpe erst bei einem kleinen Restfluß zu gewährleisten, wird das Rückschlagventil mit einer durch eine unbelastete Rückschlagabdeckung verschließbaren kleinen Öffnung versehen. Durch diese Öffnung wird bewirkt, daß das Rückschlagventil bereits bei dem durch die Größe der Öffnung bestimmten Restfluß schließt, wodurch die Membran von der Mündung der zum Druckschalter führenden Leitung abgehoben wird, so daß der bei diesem Restfluß höhere Pumpendruck zum Druckschalter gelangt und der Druckschalter somit die Förderpumpe abschaltet.

Eine zu starke Verformung der Membran durch den Differenzdruck wird auf einfache Weise dadurch vermieden, daß die Membran zwischen zwei den Hub der Membran begrenzenden Anschlägen angeordnet ist. Besonders vorteilhaft ist es, daß der obere Anschlag aus einer perforierten Platte besteht und als unterer Anschlag der mit Vertiefungen versehene Gehäuseboden dient, wobei die Vertiefungen miteinander und der Zuleitung in Verbindung stehen. Es entfällt hierdurch der Montageaufwand für den unteren Anschlag. Eine Verbindung der Vertiefungen untereinander und mit der Zuleitung ist in einfacher Weise dadurch möglich, daß die Vertiefungen aus zur Zuleitung konzentrisch und radial verlaufenden Rillen gebildet sind.

Ein exaktes Einstellen der verschiedenen Ansprechdrücke des Druckschalters erübrigt sich nach einer weiteren Ausgestaltung der Erfindung dadurch, daß der Druckschalter einen über eine Blattfeder betätigbaren Grenztaster aufweist, wobei an der Blattfeder ein mit einem Membrankörper verbundener Stößel angreift und die Leitung in einen von dem Membrankörper begrenzten Raum mündet. Durch die Spannung der Blattfeder wird der Einschaltdruck vorgegeben. Eine Veränderung des Einschaltdruckes ist in einfacher Weise dadurch möglich, daß eine auf die Blattfeder wirkende Zusatzfeder vorgesehen ist, die mittels eines Verstellgliedes mit der Blattfeder in und außer Eingriff bringbar ist. Wird die Zusatzfeder durch das Verstellglied mit der Blattfeder in Eingriff gebracht, so wird der Grenztaster bereits bei einem höheren Einschaltdruck betätigt und damit die Förderpumpe eingeschaltet. Ist die Zusatzfeder außer Eingriff, erfolgt die Betätigung des Grenztasters erst bei einem niederen Druck.

Anhand eines in der Zeichnung dargestellten Ausführungsbeispieles wird der Anmeldungsgegenstand nachfolgend näher beschrieben. Es zeigt

Fig. 1 eine schematische Darstellung einer druckgeregelten Wasserversorgungsanlage,

Fig. 2 eine konstruktive Ausführungsform einer druckgeregelten Wasserversorgungsanlage.

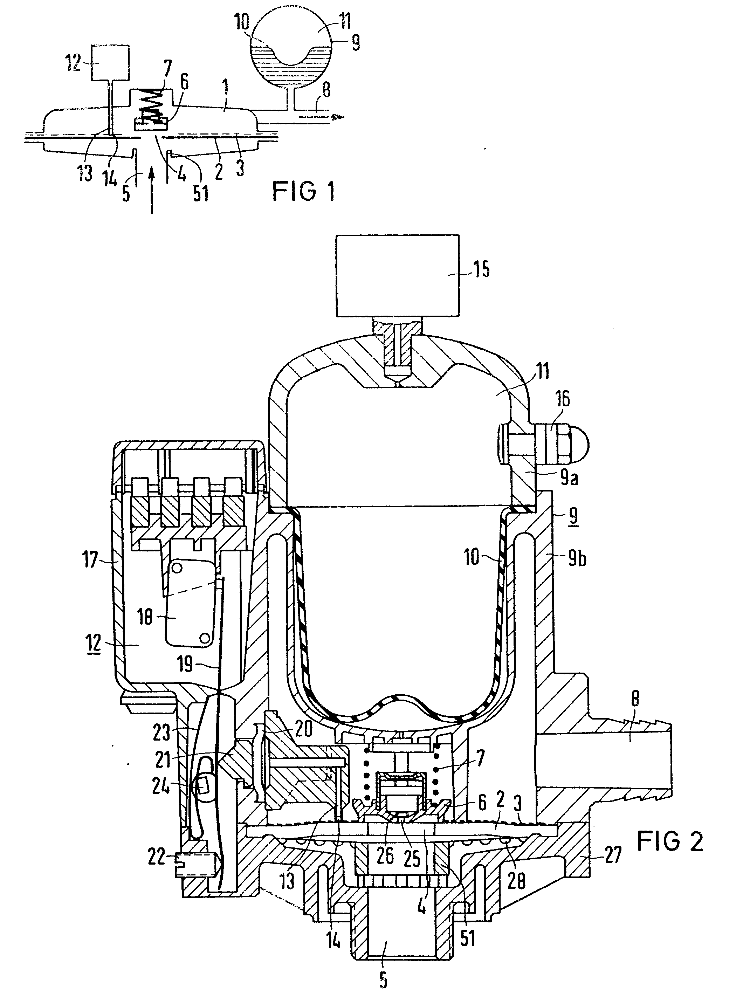

Mit 1 ist in Fig. 1 ein zweiteiliges Gehäuse bezeichnet, zwischen dessen beiden Gehäusehälften eine Membran 2 eingespannt ist. Über der Membran 2 ist eine perforierte Platte 3 vorgesehen, durch die der Hub der Membran 2 nach oben begrenzt wird. Die Membran 2 selbst weist eine Durchlaßöffnung 4 auf, durch die der über eine mit der Förderpumpe verbundene Zuleitung 5 ankommende Wasserstrom hindurchtritt. Über der Durchlaßöffnung 4 ist ein Rückschlagventil 6 angeordnet. Das Rückschlagventil 6 wird durch die Kraft einer Feder 7 gegen die Durchlaßöffnung 4 gedrückt und verschließt diese nach dem Abschalten der Förderpumpe. Die Membran 2 legt sich durch den Druck der Feder 7 an einen konzentrisch zur Zuleitung 5 angeordneten Abstützring 51 an. Am Gehäuse 1 ist ferner eine zum Verbraucher führende Entnahmeleitung 8 angeschlossen. Mit dieser Entnahmeleitung ist ein Druckspeicher 9 verbunden. Durch eine Rollmembran 10 ist in dem Druckspeicher 9 ein Gasraum 11 abgeteilt.

An dem Gehäuse 1 ist ferner ein Druckschalter 12 angeordnet, dessen Leitung 13 zu der Membran 2 geführt ist. Im Ruhezustand der Membran 2, d. h. bei abgeschalteter Förderpumpe besteht zwischen der Mündung der Leitung 13 und der Oberfläche der Membran ein kleiner Abstand 14. Dieser Abstand 14 ist so bemessen, daß die Membran beim Auslenken durch den Wasserstrom an der Mündung anliegt und diese verschließt.

Bei der detaillierten konstruktiven Ausführungsform nach Fig. 2 sind die in Fig. 1 schematisch dargestellten Teilen entsprechenden Bauelemente mit den gleichen Bezugszeichen versehen. Einer weiteren Erläuterung dieser Bauelemente bedarf es daher nicht. Nachfolgend werden daher die in Fig. 2 gegenüber der Fig. 1 zusätzlich vorhandenen Teile beschrieben. Der Druckspeicher 9 besitzt ein mit dem Gasraum 11 verbundenes Manometer 15 und ein Ventil 16. Über das Ventil 16 kann mittels einer Luftpumpe Luft in den Gasraum 11 gepumpt werden, wodurch die gewünschte Speicherkapazität erzielt wird. Die Rollmembran 10 ist zwischen einer oberen und unteren Gehäusehälfte 9a und 9b des Druckspeichers 9 eingeklemmt und trennt den Gasraum von dem Wasser.

Am Gehäuse des Druckspeichers 9 ist eine Gehäusetasche 17 angeformt, in der die einzelnen Bauteile des Druckschalters 12 angeordnet sind. Als Schaltglied weist der Druckschalter 12 einen Grenztaster 18 auf, der über eine Blattfeder 19 betätigt wird. Unter Grenztaster wird ein Schalter mit Sprungkontakt verstanden. Die Blattfeder 19 wird ihrerseits durch einen mit einem Membrankörper 20 gekoppelten Stößel 21 betätigt. Der Membrankörper 20 ist bei offener Mündung der Leitung 13 dem in der Wasserversorgungsanlage herrschenden Druck ausgesetzt. Mittels einer Einstellschraube 22 kann die Spannung der Blattfeder 19 und somit der gewünschte Einschaltdruck eingestellt werden. In der Gehäusetasche 17 ist ferner eine Zusatzfeder 23 montiert, die mittels eines von außen verstellbaren Exzenters 24 von der Blattfeder 19 abgehoben bzw. zur Anlage an der Blattfeder 19 gebracht werden kann. Je nachdem, ob die Zusatzfeder 23 an der Blattfeder 19 anliegt oder nicht, wird der Grenztaster 18 über die Blattfeder bereits bei einem höheren oder erst bei einem niederen Druck betätigt. Über den Grenztaster 18 wird eine in der Zeichnung nicht dargestellte, in der Zuleitung 5 angeordnete Förderpumpe ein- und ausgeschaltet.

Im Rückschlagventil 6 ist eine kleine Öffnung 25 vorgesehen, die durch eine als Rückschlagklappe 26 ausgebildete Rückschlagabdeckung verschließbar ist.

Die Membran 2 selbst ist zusammen mit der perforierten Platte 3, welche den Hub der Membran nach oben begrenzt, zwischen dem unteren Gehäuseteil 9b und einem mit diesem verbindbaren Abschlußdeckel 27 eingespannt. Der innere Boden des Abschlußdeckels 27 ist mit konzentrisch zu der Zuleitung 5 umlaufenden Rillen 28 versehen. Zusätzlich sind, in der Zeichnung nicht sichtbar, radial verlaufende Rillen vorgesehen, die mit der Zuleitung 5 in Verbindung stehen und sich mit den umlaufenden Rillen 28 kreuzen. Somit kann der in der Zuleitung 5 herrschende Druck unter der Membran 2 wirksam werden und diese nach oben drücken.

Die Anlage arbeitet wie folgt: Wird über die Entnahmeleitung 8 Wasser aus der Anlage entnommen, sinkt der Druck in der Anlage und auch der Druck auf den Membrankörper 20 ab. Bei weiterem Druckabfall überwiegt die Kraft der Blattfeder 19 die auf den Membrankörper 20 wirkende Kraft, so daß die Blattfeder 19 den Stößel 21 nach rechts drückt. Das am Betätigungsorgan des Grenztasters 18 anliegende Ende der Blattfeder 19 bewegt sich hierbei nach links und betätigt den Grenztaster 18. Hierbei wird über den Grenztaster 18 die Förderpumpe eingeschaltet. Durch den nun einsetzenden Förderstrom wird das Rückschlagventil 6 von der Durchlaßöffnung 4 der Membran 2 abgehoben. Das Wasser kann somit durch die Durchlaßöffnung 4 der Membran 2 hindurchströmen. Der beim Durchströmen auftretende Druckabfall hebt die Membran 2 an, so daß diese gegen die Mündung der Leitung 13 drückt und diese verschließt. Der Membrankörper 20 ist dadurch von der Wasserversorgungsanlage entkoppelt und kann nicht mehr auf die Blattfeder 19 einwirken.

Nach Beendigung der Wasserentnahme läuft die Förderpumpe noch weiter und baut in der Anlage wieder einen Druck auf, indem noch Wasser in den Druckspeicher 9 gefördert wird. Hierbei wird die Rollmembran 10 nach oben gedrückt und komprimiert die im Gasraum 11 vorhandene Luft. Bei diesem Druckaufbau läßt die Strömungsgeschwindigkeit nach, so daß sich das Rückschlagventil 6 unter der Kraft der Feder 7 wieder an die Membran 2 anlegt und diese in ihre Ausgangslage zurückdrückt.

Um sicherzustellen, daß die Förderpumpe auch bei einer geringen Restentnahme abgeschaltet wird, ist in dem Rückschlagventil 6 die kleine Öffnung 25 vorgesehen. Durch diese Öffnung 25 wird erreicht, daß das Rückschlagventil 6 durch die Kraft der Feder 7 bereits beim Erreichen einer bestimmten kleinen Durchflußmenge gegen die Membran 2 gedrückt wird. Die kleine Durchflußmenge kann dann noch durch die Öffnung 25 hindurchströmen.

Über das Rückschlagventil 6 wird die Membran 2 ebenfalls durch die Kraft der Feder 7 nach unten gegen den Abstützring 51 gedrückt. Hierbei wird die Mündung der Leitung 13 freigegeben, so daß nunmehr der in der Anlage vorhandene Druck auf den Membrankörper 20 einwirkt. Über den mit dem Membrankörper 20 verbundenen Stößel 21 wird die Blattfeder 19 nach links gedrückt und hebt hierbei ihr auf dem Betätigungsorgan des Grenztasters 19 aufliegendes Ende von diesem ab. Daraufhin springt der Grenztaster 19 in seine andere Schaltlage und schaltet die Förderpumpe ab. Nach dem Abschalten der Förderpumpe wird die Rückschlagklappe 26 durch den in der Wasserversorgungsanlage herrschenden Druck gegen die Öffnung 25 gedrückt und verschließt diese.

Bei der beschriebenen Wasserversorgungsanlage bildet die Membran 2 den Sitz für das Rückschlagventil 6 und verschließt direkt die zum Druckschalter führende Leitung 13. Es sind somit für das Rückschlagventil und für das Verschließen der Leitung 13 keine gesonderten Bauteile erforderlich. Hierdurch wird insgesamt eine raumsparende Konstruktion erzielt.

Das Entkoppeln des Membrankörpers 20 von der Wasserversorgungsanlage während der Wasserentnahme und die Verwendung eines Grenztasters hat den Vorteil, daß kein bestimmter Ausschaltdruck einjustiert werden muß. Der Ausschaltdruck muß lediglich zwei Bedingungen erfüllen, er muß über dem Einschaltdruck und unter dem maximalen Druck der Förderpumpe liegen. Die Bedingung, daß der Ausschaltdruck über dem Einschaltdruck liegt, wird durch die Anordnung der Blattfeder 19 erfüllt. Diese muß von dem Membrankörper 20 beim Ausschalten wieder in ihre andere Lage zurückgedrückt werden. Dies ist nur bei einem Druck möglich, der höher ist als der Druck, bei dem die Blattfeder 19 den Membrankörper 20 nach rechts verschoben hat. Somit ist durch den Aufbau des Druckschalters 12 von vornherein die Bedingung des gegenüber dem Einschaltdruck höheren Ausschaltdruckes erfüllt. Dies gilt auch, wenn über den Exzenter 24 die Zusatzfeder 23 mit der Blattfeder 19 in Eingriff gebracht ist.

## Patentansprüche

1. Druckgeregelte Wasserversorgungsanlage mit einem zwischen einer Zuleitung (5) und einer zu einer Verbraucheranlage führenden Entnahmeleitung (8) angeordnetem Druckspeicher (9), wobei zwischen der Mündung der Zuleitung (5) und dem Druckspeicher (9) eine durch Druckdifferenz betätigbare Membran (2) vorgesehen und durch diese ein eine mit der Zuleitung (5) verbundene Förderpumpe ein- und ausschaltender Druckschalter (12) gesteuert ist, dadurch gekennzeichnet, daß die Membran (2) direkt im Förderstrom des Wassers angeordnet und mit einer Durchlaßöffnung (4) versehen ist, deren Größe in bezug auf die Förderleistung der Pumpe so bemessen ist, daß an der Durchlaßöffnung (4) ein eine Druckdifferenz hervorrufender Druckabfall entsteht, und daß auf der dem Druckspeicher (9) zugekehrten Seite der Membran (2) über der Durchlaßöffnung (4) ein unter der Einwirkung einer auf die Membran (2) gerichteten Kraft stehendes Rückschlagventil (6) und die Mündung einer zum Druckschalter (12) führenden Leitung (13) angeordnet sind, wobei der Abstand (14) der Mündung zur Membranoberfläche so bemessen ist, daß die Membran (2) beim Auslenken infolge einer Druckdifferenz an der Mündung anliegt und diese verschließt.

2. Wasserversorgungsanlage nach Anspruch 1, dadurch gekennzeichnet, daß auf der dem Druckspeicher abgekehrten Seite der Membran (2) ein Abstützring (51) konzentrisch zur Durchlaßöffnung (4) angeordnet ist.

3. Wasserversorgungsanlage nach Anspruch 1, dadurch gekennzeichnet, daß das Rückschlagventil (6) mit einer durch eine unbelastete Rückschlagabdeckung (26) verschließbaren kleinen Öffnung (25) versehen ist.

4. Wasserversorgungsanlage nach Anspruch 1, 2 oder 3, dadurch gekennzeichnet, daß die Membran (2) zwischen zwei den Hub begrenzenden Anschlägen angeordnet ist.

5. Wasserversorgungsanlage nach Anspruch 4, dadurch gekennzeichnet, daß der obere Anschlag aus einer perforierten Platte (3) besteht und als unterer Anschlag der mit Vertiefungen (28) versehene Gehäuseboden dient, wobei die Vertiefungen (28) miteinander und der Zuleitung (5) in Verbindung stehen.

6. Wasserversorgungsanlage nach Anspruch 5, dadurch gekennzeichnet, daß die Vertiefungen aus zur Zuleitung (5) konzentrisch und radial verlaufenden Rillen (28) gebildet sind.

7. Wasserversorgungsanlage nach einem der vorhergehenden Ansprüche, dadurch gekennzeichnet, daß der Druckschalter (12) einen über eine Blattfeder (19) betätigbaren Grenztaster (18) aufweist, wobei an der Blattfeder (19) ein mit einem Membrankörper (20) verbundener Stößel (21) angreift und die Leitung (13) in einen von dem Membrankörper (20) begrenzten Raum mündet.

8. Wasserversorgungsanlage nach Anspruch 7, dadurch gekennzeichnet, daß eine auf die Blattfeder (19) wirkende Zusatzfeder (23) vorgesehen ist, die mittels eines Verstellgliedes (24) mit der Blattfeder (19) in oder außer Eingriff bringbar ist.

## Claims

1. A pressure-regulated water supply system comprising a pressure reservoir (9) arranged between a supply line (5) and a discharge line (8) which leads to a consumer system, wherein a differential pressure-operated diaphragm (2) is arranged between the mouth of the supply line (5) and the pressure reservoir (9) and controls a pressure switch (12) which switches on and off a transfer pump which is connected to the supply line (5), characterised in that the diaphragm (2) is arranged directly in the flow of water being transferred and is provided with an opening (4) whose size relative to the transfer power of the pump has a value such that a pressure drop which gives rise to a pressure difference occurs at the opening (4), and that at the side of the diaphragm (2) facing towards the pressure reservoir (9), above the opening (4), there is arranged a nonreturn valve (6) which is biased by a force towards the diaphragm (2), and the mouth of a pipe (13) which leads to the pressure switch (12), the distance (14) between the opening and the face of the diaphragm has a value such that during deflection of the diaphragm as a result of a pressure difference, the diaphragm (2) comes into contact with and closes the mouth of the pipe.

2. Water supply system as claimed in Claim 1, characterised in that on the side of the diaphragm (2) facing away from the pressure reservoir a support ring (51) is arranged concentrically with the opening (4).

3. Water supply system as claimed in Claim 1, characterised in that the non-return valve (6) is provided with a small opening (25) which can be closed by an unloaded non-return cover (26).

4. Water supply system as claimed in Claim 1, 2 or 3, characterised in that the diaphragm (2) is arranged between two stops which limit the travel of the diaphragm.

5. Water supply system as claimed in Claim 4, characterised in that the upper stop means consists of a perforated plate (3) and the lower stop means consists of the housing floor provided with recesses (28), the recesses (28) being connected to one another and to the supply line (5).

6. Water supply system as claimed in Claim 5, characterised in that the recesses are formed from channels (28) which run concentrically and radially with respect to the supply line (5).

7. Water supply system as claimed in one of the preceding Claims, characterised in that the pressure switch (12) has a limit sensor (28) which can be actuated by means of a leaf spring (19), wherein a tappet (21) connected to a diaphragm body (20) acts upon the leaf spring (19), and the line (13) opens into a space bounded by the diaphragm body (20).

8. Water supply system as claimed in Claim 7, characterised in that an additional spring (23) is provided which acts on the leaf spring (19) and which can be brought into or out of engagement with the leaf spring (19) by means of an adjusting element (24).

## Revendications

1. Installation de distribution d'eau, régulée par une pression, du type comportant un réservoir de pression (9) entre une conduite d'arrivée (5) et une conduite de prélèvement (8) menant à uns installation de consommation, et dans laquelle il est prévu entre l'embouchure de la conduite d'arrivée (5) et le réservoir de pression (9) une membrane (2) actionnée par une différence de pression et à l'aide de laquelle est commandé un interrupteur manométrique (12) contrôlant la mise en service et la mise hors service d'une pompe reliée à la conduite d'arrivée (5), caractérisée par le fait que la membrane (2) est disposée directement dans le courant de l'eau transportée et est pourvue d'une ouverture de passage (4) dont la dimension, par rapport au débit de la pompe, est telle qu'une chute de pression provoquant des différences de pression intervient au niveau de ladite ouverture (4) et que sur le côté de la membrane (2) tourné vers le réservoir de pression (9) sont prévues, au-dessus de l'ouverture (4), une soupape de retenue (6) soumise à l'action d'une force dirigée sur la membrane (2) et l'embouchure d'une conduite (13) menant à l'interrupteur manométrique (12), la distance entre l'embouchure et la surface de la membrane étant telle que ladite membrane (2) lorsqu'elle est déviée par suite d'une différence de pression, s'appuie contre l'embouchure et l'obture.

2. Installation de distribution d'eau selon la revendication 1, caractérisée par le fait que sur le côté de la membrane (2) éloigné du réservoir de pression est disposée une bague d'appui (51) concentrique à l'ouverture (4).

3. Installation de distribution d'eau selon la revendication 1, caractérisée par le fait que la soupape de retenue (6) est pourvue d'une petite ouverture (23) susceptible d'être fermée par un obturateur (26) non chargé.

4. Installation de distribution d'eau selon la revendication 1, 2 ou 3, caractérisée par le fait que la membrane (2) est disposée entre deux butées limitant la course.

5. Installation de distribution d'eau selon la revendication 4, caractérisée par le fait que la butée supérieure est constituée par une plaque perforée (3) et que la butée inférieure est constituée par le fond du carter pourvu d'encoches (28) qui sont reliées entre elles et à la conduite d'amenée (5).

6. Installation de distribution d'eau selon la revendication 5, caractérisée par le fait que les encoches sont constituées par des rainures (28) concentriques à la conduite d'amenée (5) et par des rainures qui s'étendent radialement.

7. Installation de distribution d'eau selon l'une des revendications précédentes, caractérisée par le fait que l'interrupteur manométrique (12) comporte un détecteur de fin de course (18) susceptible d'être commandé par un ressort à lame (19), un poussoir (21), relié au corps de membrane (20), attaquant le ressort à lames (19) et la conduite débouchant dans une chambre délimitée par le corps de membrane (20).

8. Installation de distribution d'eau selon la revendication 7, caractérisée par le fait qu'il est prévu un ressort supplémentaire (23) agissant sur le ressort à lames (13) et susceptible d'être amenée en contact avec ou d'être écartée du ressort à lames (19).

FIG 1

FIG 2